(19)

Europäisches
Patentamt
European
Patent Office
Office européen
des brevets

(11) **EP 4 383 141 A1**

(12) **EUROPEAN PATENT APPLICATION**

(43) Date of publication:
**12.06.2024 Bulletin 2024/24**

(21) Application number: **22306829.7**

(22) Date of filing: **08.12.2022**

(51) International Patent Classification (IPC):
***G06N 10/40*** *(2022.01)*

(52) Cooperative Patent Classification (CPC):
**G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
• **SIGNOLES, Adrien**
 **91300 Massy (FR)**
• **DAREAU, Alexandre**
 **91300 Massy (FR)**
• **BEGUIN, Lucas**
 **91300 Massy (FR)**

(74) Representative: **De Vries & Metman**
 **Overschiestraat 180**
 **1062 XK Amsterdam (NL)**

(54) **FAST OPTICAL QUBIT ADDRESSING**

(57) Methods and systems for optically addressing qubits in a qubit array, are described wherein the method comprises configuring micromirrors of at least a first and second micromirror device based on addressing information identifying one or more first qubits and one or more second qubits in the qubit array that need to be optically addressed, generating a structured light beam which is spatially structured in accordance with the spatial arrangement of the qubits in the qubit array and the spatial arrangement of micromirrors of the first and second micromirror device and which is temporally structured based on a polarization or phase of the structure light beam; exposing the first micromirror device with part of the structured light beam that is associated with a first polarisation or first phase and the second micromirror device with a part of the structured light beam that is associated with a second polarisation or second phase; and, exposing the one or more first qubits identified with a first plurality of focused light beams formed based on spatially structured light originating from the first micromirror device and exposing the one or more second qubits with a second plurality of focused light beams formed based spatially structured light originating from the second micromirror device.

Fig. 1

EP 4 383 141 A1

**Description**

Technical field

The disclosure relates to fast optical qubit addressing, and in particular, though not exclusively, to methods and systems for optically addressing qubits in a qubit array and a computer program product to execute such methods for optical qubit addressing.

Background

Current quantum computers based on trapped qubits provide a promising platform for quantum computing. Executing quantum gate operations of a quantum circuit defining a quantum algorithm requires accurate, fast and scalable optical addressing of the trapped qubits. WO2019014589 describes a neutral atom computer comprising trapped qubits which are addressed by spatially controlling optical beams using acoustooptic deflectors (AODs). AOD-based controlling of light beams only provides a limited bandwidth. Moreover, addressing qubits based on arbitrarily qubit illumination patterns is difficult using AODs.

Other techniques to optically address qubits include the use of spatial light modulators (SLMs). For example, WO2021112948 describes a method for addressing qubits of a qubit quantum computer using holograms. This method requires encoding layers of gate operations of a quantum circuit into holograms displayed on a slow segmented SLM, which may be used to produce spatial optical distributions that are used to operate on a qubit array. This scheme does not scale very well towards large qubits arrays as an SLM (or part thereof) is needed for each layer of the algorithm.

Hence, from the above it follows that there is a need in the art for improved optical addressing schemes of qubits. In particular, there is a need in the art for improved methods and systems that provide fast individual optical addressing of multiple qubits in a qubit array.

Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments in this disclosure aim to provide scalable and fast individual addressing of multiple qubits in a qubit array of a quantum computer. Hence, the embodiments define methods and systems for fast optical addressing of qubits in a qubit array based on spatio-temporally structured light.

In an aspect, the embodiments relate to a method of optically addressing qubits in a qubit array. The method may include configuring micromirrors of at least a first and second micromirror device based on addressing information identifying one or more first qubits and one or more second qubits in the qubit array that need to be optically addressed at a first time instance and a second time instance respectively. In a further embodiment. The method may include generating a structured light beam which is spatially structured in accordance with the spatial arrangement of the qubits in the qubit array and the spatial arrangement of micromirrors of the first and second micromirror device and which is temporally structured based on a polarization or phase of the structure light beam. The method may further include exposing the first micromirror device with part of the structured light beam that is associated with a first polarisation or first phase and the second micromirror device with a part of the structured light beam that is associated with a second polarisation or second phase. The method may also include exposing the one or more first qubits identified with a first plurality of focused light beams formed based on spatially structured light originating from the first micromirror device and exposing the one or more second qubits with a second plurality of focused light beams formed based spatially structured light originating from the second micromirror device.

In an embodiment, the addressing information may include at least a first and second illumination pattern, the first illumination pattern identifying the first qubits in the qubit array that need to be optically addressed at a first time instance and second illumination pattern identifying the second qubits in the qubit array that need to be optically addressed at a second time instance;

Here, the term illumination pattern refers to information (in any format) defining qubits in a qubit array that need to be optically addressed for any purpose, e.g. calibration, control, off-resonance, single gate operation, multi gate operation. Typically, an illumination pattern may defined an arbitrary selection of qubits in the qubit array that need to be optically addressed simultaneously.

Hence, temporal structured based on polarization or phase may be used to alternately exposure two or more computer-controlled micromirror devices by a spatially structured light beam. This way, different qubits identified by addressing information may be optically addressed at high frequencies to perform any type of operation on qubits, including calibration, initialisation, single-gate operations, multi-gate operations etc. The micromirror devices may reflect part of the spatially structured light towards the qubit array so it can be used fast and efficient address multiple individual qubits simultaneously. The spatial modulation gives a spatial structure to the light beam so that it has a 2D grid-like intensity profile that matches the gird of micromirrors of the micromirror devices and the grid of qubits. This way each of a plurality of light beams can be focused onto an individual qubit, without affecting neighbouring qubits. Further, the addressing scheme is based on simple illumination patterns, which allow any type of addressing, without complex encoding schemes as known from holographic type of qubit addressing.

In an embodiment, the qubit array may be a 1D, 2D or 3D qubit array.

In an embodiment, the generating a structured light beam may include generating a spatially structured light beam by exposing a light beam of a laser system to a spatial light modulator. In a further embodiment, the generating a structured light beam may include temporarily structuring a light beam of a laser system or the spatially structured light beam using a temporal light modulator. In an embodiment, the temporal light modulator may be configured to modulate the polarization or the phase of a light beam. In an embodiment, the spatial light modulator may comprise an electro-optic modulator for modulating the polarization or the phase of a light beam.

In an embodiment, the modulation frequency of the polarization modulator may be between 10 and 1000 MHz.

In an embodiment, exposing the first and second micromirror device may include: exposing the structured light beam to a beam splitter to split the structured light beam into a spatially structured light beam associated with a first polarization or a first phase and a spatially structured light beam associated with a second polarization or a second phase.

In an embodiment, the addressing information, such as the first and second illumination pattern, may identify one or more pairs of qubits, the first illumination pattern identifying for each of the one or more pairs of qubits a first qubit that needs to be addressed and the second illumination pattern identifying for each of the one or more pairs of qubits a second qubit that needs to be addressed.

In an embodiment, at least part of the addressing information may define qubit operations of a quantum circuit.

In an embodiment, the qubits may be atomic qubits, e.g. based on neutral atoms. In an embodiment t, the wavelength of the structured light beam may be selected to control the Rydberg states of the atomic qubits in the qubit array.

In an embodiment, the method may comprise: after the exposure of the qubits identified by the first and second illumination pattern, configuring micromirrors of the first and second micromirror device in accordance with a third and fourth illumination pattern respectively, identifying further qubits in the qubit array that need to be optically addressed.

In an embodiment, each of the plurality of focused light beams may be configured to address one of the qubits in the qubit array, without affecting one or more qubits neighbouring the addressed qubit.

In an embodiment, each of the first and second micromirror device may be configured as a digital micromirror device comprising mechanically movable micromirrors. In an embodiment, the spatial structuring of the structured light beam may be based on a liquid crystal based spatial light modulator.

In an embodiment, the method may include generating a plurality of focussed light beams to form an array of optical tweezers for optically trapping the qubits

In a further aspect, the embodiments may relate to a system for optically addressing qubits in a qubit array, preferably a 2D qubit array, wherein the system may comprise a computer connected to an optical system comprising at least a first and second micromirror device, a laser system, a spatial light modulator and an electro-optic modulator. In an embodiment, the computer may be configured to execute one or more of the following steps: configure micromirrors of at least the first and second micromirror device based on addressing information identifying one or more first qubits and one or more second qubits in the qubit array that need to be optically addressed at a first time instance and a second time instance respectively; control the laser system, the spatial light modulator and the electro-optic modulator to generate a structured light beam which is spatially structured in accordance with the spatial arrangement of the qubits in the qubit array and the micromirrors of the first and second micromirror device and which is temporally structured based on a polarization or phase of the structure light beam; expose the first micromirror device with part of the structured light beam that is associated with a first polarisation or first phase and the second micromirror device with a part of the structured light beam that is associated with a second polarisation or second phase; and, expose the one or more first qubits identified with a first plurality of focused light beams formed based on spatially structured light originating from the first micromirror device and exposing the one or more second qubits with a second plurality of focused light beams formed based spatially structured light originating from the second micromirror device.

In another aspect, the embodiments may relate to an optical qubit addressing module for addressing qubits in a qubit array. The module may comprise at least first and second micromirror devices configured to project a first spatially structured light beam onto first qubits in the qubit array and to project a second spatially structured light beam onto second qubits in the qubit array. The module may further comprise at least one or more of the following optical systems: a first optical system configured to generate a structured light beam which is spatially structured in accordance with the spatial arrangement of the qubits in the qubit array and the spatial arrangement of micromirrors of the first and second micromirror device and which is temporally structured based on a polarization or phase of the structure light beam; a second optical system configured to expose the first micromirror device with part of the structured light beam that is associated with a first polarisation or first phase and to expose the second micromirror device with a part of the structured light beam that is associated with a second polarisation or second phase; and a third optical system configured to expose the first qubits with a first plurality of focused light beams formed based on spatially structured light originating from the first micromirror device and exposing the second qubits with a second plurality of focused light beams formed based spatially structured light originating from the second micromirror device.

The embodiments may also relate to a hybrid computer system comprising a quantum register comprising an array of qubits and a classical computer system configured to control an optical qubit addressing module configured for addressing qubits in the qubit array, wherein classical computer system is configured to perform executable operations, wherein the executable operations may comprise one or more of the following steps: configuring micromirrors of at least the first and second micromirror device based on addressing information identifying one or more first qubits and one or more second qubits in the qubit array that need to be optically addressed at a first time instance and a second time instance respectively; generating a structured light beam which is spatially structured in accordance with the spatial arrangement of the qubits in the qubit array and the spatial arrangement of micromirrors of the first and second micromirror device and which is temporally structured based on a polarization or phase of the structure light beam; exposing the first micromirror device with part of the structured light beam that is associated with a first polarisation or first phase and exposing the second micromirror device with a part of the structured light beam that is associated with a second polarisation or second phase; and, exposing the one or more first qubits with a first plurality of focused light beams formed based on spatially structured light originating from the first micromirror device and exposing the one or more second qubits with a second plurality of focused light beams formed based spatially structured light originating from the second micromirror device.

In a further aspect, the embodiments may relate to a computer program or suite of computer programs comprising one or more software code portions the software code portions, when run on a computer, being configured for executing the method steps according any the steps described with reference to the steps above.

The invention will be further illustrated with reference to the attached drawings, which schematically will show embodiments according to the invention. It will be understood that the invention is not in any way restricted to these specific embodiments.

Brief Description of the drawings

Fig. 1 depicts a system for optically addressing qubits in qubit array according to an embodiment;
Fig. 2A and 2B depict a general scheme of optically addressing qubits in a qubit array according to an embodiment;
Fig. 3 schematically depicts a system for optically addressing qubits according to another embodiment;
Fig. 4 schematically illumination patterns for optically addressing qubits in an qubit array according to an embodiment;
Fig. 5 schematically depicts a timing graph illustrating the exposure of the array of qubits using different illumination patterns representing gate operations according to an embodiment;
Fig. 6 depicts a system for optically addressing an array of atomic qubits according to yet another embodiment;
Fig. 7 show examples of qubit operations which may be executed using the optical qubit addressing schemes described with reference to the embodiments.
Fig. 8 depicts a computer system comprising a classical computer and a quantum computer system comprising an atomic qubit register.

Description of the embodiments

The embodiments in this disclosure generally relate to methods and systems for optically addressing qubits in a qubit array, for example a one-dimensional (1D), two-dimensional (2-D) or three-dimensional (3D) array of atomic qubits. Here, a qubit refers to a two-state quantum system which can be described by quantized energy levels and which can be used to process quantum information. More generally, n-state quantum systems may be used as a quantum computational unit referred to as a qudit. Although the embodiments are described with reference to qubits, they are not limited thereto and can also be used to optically address qubits in a qubit array.

Atomic qubits may be used as qubits register of a quantum computer. Atomic qubits can be implemented based on neutral atoms or other quantum systems such as ions, molecules, trapping centres, etc. A qubit may be implemented on the basis of a single quantum particle such as a single atom or ion, or a group of quantum particles. A trapping system, e.g. an electron-magnetic trapping system may be used to arrange the qubits in a geometrical arrangement, example, a one dimensional, two dimensional or three-dimensional geometrical arrangement. Typically, the distance between the quantum particles is selected so that interaction between the quantum particles is possible. For example, when using neutral atoms as qubit registers the distance between the particles is of the order of micrometres so that qubits can interact when they are in the Rydberg state. The qubits can be controlled and manipulated by optically addressing individual qubits in the array of qubits.

In this application, optically addressing an individual qubit refers to the process of exposing a qubit with light of a focused laser beam of a certain intensity. Typically, the exposure of a qubit is based on one or more laser pulses of a certain amplitude and duration, typically in the range of nanoseconds. The focused light beam may have an intensity profile such that the light only interacts with the individual qubit without affecting neighboring qubits. When an individual qubit is optically addressed the light may resonantly interact the qubit. Alternatively, the light may put the individually addressed qubit in an off-resonant state. Both types of optical addressing can be used for implementing the execution of qubit operations. In some embodiments, individual optical addressing of qubits may be combined with global addressing using e.g. a laser beam that is configured to expose multiple or even all qubits in the qubit array. Alternatively and/or in additional, a microwave field that interacts with the qubits in the qubit array may be used to globally address qubits.

When executing large and complex quantum circuits on an atomic qubit quantum computer, fast optical addressing schemes are needed that allow accurate optical manipulation of individual qubits in the qubit array based on arbitrary illumination patterns. Here, the optical manipulation of individual qubits includes execution of single qubit operations, two-qubit operation and/or multi-qubit operations, wherein the two- or multi-qubit operations require interaction between the qubits. Interaction may for example occur when qubits in the Rydberg state are close to each other, e.g. neighbouring qubits. The qubit operations need to be executed within the coherence time of the states of the qubits. As the coherence time of the quantum states are still rather short, execution of qubit operations needs to be performed in a fast and efficient way. Here, efficient execution may include executing qubits operations simultaneously (in parallel) in different parts of the qubit array.

To address these challenges, the embodiments in this disclosure describe methods and systems for optically addressing qubits in a qubit array based on spatio-temporally structured light. Temporal structured based on polarization is used to enable alternating exposure of two or more computer-controlled micromirror devices by a spatially structured light beam. The micromirror devices may reflect part of the spatially structured light towards the qubit array so it can be used fast and efficient address multiple individual qubits. The spatial modulation gives a spatial structure to the light beam so that it has a 2D grid-like intensity profile that matches the gird of micromirrors of the micromirror devices and the grid of qubits so that each of a plurality of light beams can be focused onto an individual qubit, without affecting neighbouring qubits. Further, the addressing scheme is based on simple illumination patterns, which allow any type of addressing, without complex encoding schemes as known from holographic type of qubit addressing.

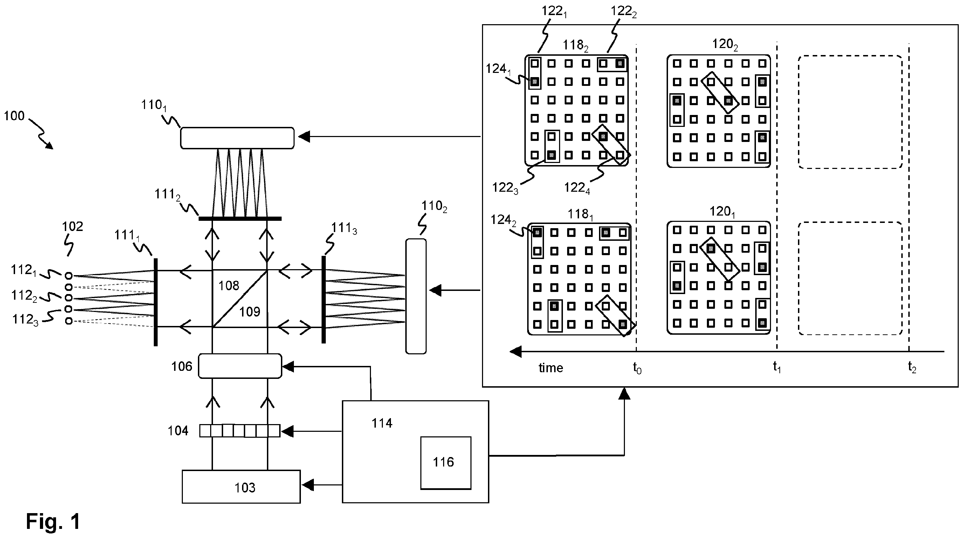

**Fig 1** illustrates a system for optically addressing qubits of a qubit array according to an embodiment. In particular, the figure illustrates an arrangement of qubits $102$, e.g. a 2D qubit array, wherein an optical addressing module is configured to optically address qubits by projecting focused light beams onto individual qubits of the qubit array. As shown in the figure, the optical addressing module may include a laser system $103$, which is optically aligned with a spatial modulator $104$, for example a spatial light modulator (SLM) for spatially modulating a light field, a temporal light modulator $106$, e.g. electro-optic modulator (EOM) for temporally modulating a light field based on polarization or phase, an optical splitter $108$ for splitting a temporally modulated light beam based on the temporally modulated optical property such as polarization or phase. The optical splitter may be optically aligned with at least two micromirror devices $110_{1,2}$, such as a digital micromirror device (DMD) and the qubit array. Optical elements $111_{1,2}$, refractive and/or diffractive optical elements, may be used to focus spatially modulated light beam originating from the laser source as a plurality of focused light beams onto the micromirror devices . Spatially modulated light originating from the micromirror devices may be relayed via an optical relay element $109$ towards the qubit array. One or more further optical elements $111_3$, refractive and/or diffractive optical elements, may be used to focus the spatially modulated light originating from the micromirror devices into a plurality of light beams, wherein each of the plurality of light beams is focused onto an qubit in the qubit array.

The optical addressing module may be controlled by a computer $112$. The micromirrors of the reflective SLMs may be controlled by the computer according to addressing information that identifies different qubits in the qubit array that need to be optically addressed at different time instances. The addressing information may be in the form of different illumination patterns wherein each illumination pattern represents information (in any data format) that identifies qubits in the qubit array that need to be optically addressed at a given time instance. For example, in the figure a plurality of focused light beams are generated wherein each focused light beam addresses a qubit $112_{1-3}$. The beam profile, i.e. the cross sectional intensity profile, of a focused light beam that is used to optically address a qubit may be configured such that only the addressed qubit interacts (is exposed to) with the light of the focused light beam, while other qubits, e.g. neighboring qubits, are not influenced by the focused light beam that is used for addressing the qubit. Qubits not identified in the illumination pattern are not addressed, i.e. no focused light beams are generated for these qubits.

The computer may configure the micromirrors of the micromirror devices based on the information in the illumination patterns at predetermined time instances, e.g. at a frequency which can be handled by the micromirror devices. For example, in an embodiment, the micromirror devices may be a MEMS based digital micromirror device (DMD) which has switching times of tens of microseconds. For example, at time instance $t_o$ the first and second micromirror device may be configured based on information associated with a first pair of illumination patterns $118_{1,2}$ and at time instance $t_1$ the first and second micromirror device may be configured based on information associated with a second pair of illumination patterns $120_{1,2}$.

In an embodiment, the addressing information may represent "digital" qubit operations, e.g. single qubit operations and/or multiple (e.g. two) qubit operations. In an embodiment, illumination patterns may represent a plurality of single-, two- or multi qubit gate operations, which can be executed by the optical addressing module at high speed.

A two-qubit operation may be executed by optically addressing one or more neighboring pairs of qubits in the qubit array. For example, illumination patterns $118_{1,2}$ may identify one or more pairs of qubits **118** that are close to each other, wherein the first illumination pattern $118_1$ may be used by the computer to instruct the first micromirror device to spatially modulate the reflected light so that a first qubit $124_1$ of each qubit pair is exposed to a focused laser beam. Similarly, the second illumination pattern may be used by the computer to instruct the second micromirror device to spatially modulate the reflected light so that a second qubit $124_2$ of the qubit pair is exposed to a focused laser beam. In an embodiment, these exposures may be part of an execution of a two-qubit logical gate operation.

In a similar way (not shown), the addressing information may identify one or more qubits for performing single qubit operations, such as a NOT gate. A single qubit operation may be executed by optically addressing a qubit identified by an illumination pattern with a focused light pulse (a so-called $\pi$-pulse) of a certain amplitude and duration so that when the qubit is in the 11) state the laser field will rotate the Bloch vector over an angle of $\pi$ so that it ends up in the 10) state and vice-versa.

In further embodiments, the addressing information may be used to identify qubits that need to be optically addressed for other reasons, e.g. to prepare, e.g. calibrate or initialize qubits in the qubit array. In other embodiments, one or more illumination patterns may be used to identify a large group of qubits to achieve entanglement between the optically addressed group of qubits. Such addressing may be used when using the atomic quantum register for analog quantum computation schemes or for digital-analog quantum computation schemes.

The computer may include an illumination pattern generator **113,** which is configured to convert qubit operations in a quantum circuit to a sequence of illumination patterns representing information identifying which qubits need to be addressed, which is used by the computer to control the micromirror devices to expose predetermined qubits in the qubit array.

To execute the qubit operations of a quantum circuit, the laser system may be controlled to generate a laser beam which is spatially modulated by an SLM, preferably a liquid crystal type SLM, to form a spatially modulated light field. The EOM may be used to temporal modulate the polarization or phase of the spatially modulated light field. The EOM may be controlled by a high frequency control signal so that the polarization or phase may be modulated at high frequencies. In an embodiment, the frequency of the polarization modulation may be between 10 and 100 MHz. This way, the polarization or phase of the spatially modulated light field may be modulated (switches) between (at least) a first polarization and a second polarization or a first phase and a second phase.

Depending on the polarization or phase, the structured light field will be directed by the splitter to the first reflective SLM $110_1$ or to the second reflective SLM $110_2$. Lenses $111_{1-3}$ may be used to focus the spatially modulated light field as a plurality of focused laser beams onto the micromirrors of the reflective SLMs, wherein the illumination pattern determines which qubits are exposed to the focused laser beams. Thus, by switching the polarization of the structured light fields at a high frequency, the qubits in the qubit array may be addressed at a high frequency using different light patterns, e.g. a first light pattern and a second illumination pattern. Thereafter, the reflective SLMs may be configured according to a new set of illumination patterns followed by fast exposure of individual qubits to the new illumination patterns.

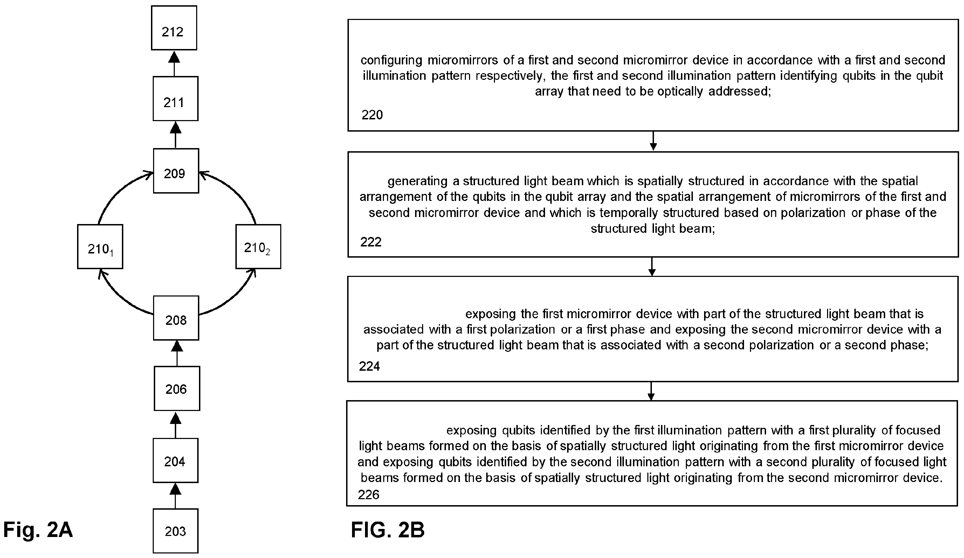

**Fig. 2A** and **2B** depict a system and a flow chart illustrating the generic concept underlying the optically addressing schemes described in this application. As shown in **Fig. 2A,** the system may include an optical source system **203,** e.g. a laser system, for generating a light beam of a certain wavelength, a spatial modulator **204** for spatially modulating the light beam, a temporal modulator **206** for temporality modulating the light beam, a polarization or phase dependent splitter **208** for splitting the spatio-temporally structured light beam in two spatially structured light beams, at least two computer-controlled micromirror devices $212_{1,2}$, an optical relay element **209** for relaying spatially modulated light from each of the micromirror devices towards a qubit array **212** and an optical system for focusing the spatially modulated light as a plurality of focused light beams onto individual qubits of the qubit array. The system may be controlled by a computer (not shown) which may use illumination patterns identifying qubits in the qubit array that need to be addressed to control the micromirror devices in a similar was as described with reference to **Fig. 1.**

The micromirror devices may be configured as reflective SLMs that are based on arrays of addressable micromirrors. These SLM are typically referred to as digital micromirror devices (DMDs). DMDs comprise micro-scale mirrors which can deflected to redirect incident light towards a target ("on") or away from a target ("off"). The micromirrors may be controlled in a binary way, i.e. either "on" of "off'. This way, small light beams can be directed towards and focussed onto individual qubits in the qubit array. DMDs have high switching times (in the order of tens of microseconds) and are thus suitable for fast optical addressing of qubits.

The one or more spatial light modulators for generating the spatio-temporally structured light beam may be based on a Liquid-Crystal type SLM, such as liquid-crystal on silicon (LCOS). Such SLM may be configured as a transmissive or a reflective SLM. The pixels of these SLM may have many different settings to control the phase and/or amplitude of light. In contrast to DMDs, LC-based SLMs are rather slow (in the order of 100 Hz).

Fig. 2B depicts a flow chart of a method for optically addressing qubits of a qubit array that can be executed using a system as depicted in Fig. 2B. The method may include a step of configuring micromirrors of a first and second micromirror device based on addressing information defining qubits in the qubit array that need to be addressed at one or more different time instances (step 222). In In an embodiment, one or more illumination patterns may be used to define qubits in the qubit array that need to be addressed. An illumination pattern may represent information (in any form) which identifies which qubits in the qubit array need to be optically addressed at a certain time instance. Typically, an illumination pattern may defined an arbitrary selection of qubits in the qubit array that need to be optically addressed simultaneously. The addressing information may be used by a computer to control the micromirrors of the micromirror devices. The addressing information, such as first and second illumination pattern may represent single and multi-qubit qubit operations. This way, a sequence of (pairs of) illumination pattern may represent qubit operations defining a quantum algorithm.

The method may further include a step of generating a structured light beam (step 224) wherein the structured light is spatially structured in accordance with the spatial arrangement of the qubits in the qubit array and the spatial arrangement of micromirrors of the first and second micromirror device. The structured light beam may also be temporally structured based on the polarisation, for example a first and second polarization.

In a further step, the first micromirror device may be exposed with part of the spatially structured light beam that is associated with the first polarization and the second micromirror device with a part of the spatially structured light beam that is associated with the second polarization (step 226). Hence, the micromirror devices are exposed based on the temporal polarisation of the structured light beam. The temporally structured light beam may be split using a polarisation splitter, which as an input for receiving the structured light beam and (at least) to outputs associated with structured light beam of the first polarization and the second polarisation. This way, the micromirrors can be alternately exposed by the structured light at a frequency that is directly linked to the temporal modulation frequency of the structured light beam.

In the final step (228), first qubits identified by the addressing information may be simultaneously exposed based on a first plurality of focused light beams formed on the basis of spatially structured light originating from the first micromirror device and second qubits identified by the addressing information may be simultaneously exposed based on a second plurality of focused light beams formed on the basis of spatially structured light originating from the second micromirror device.

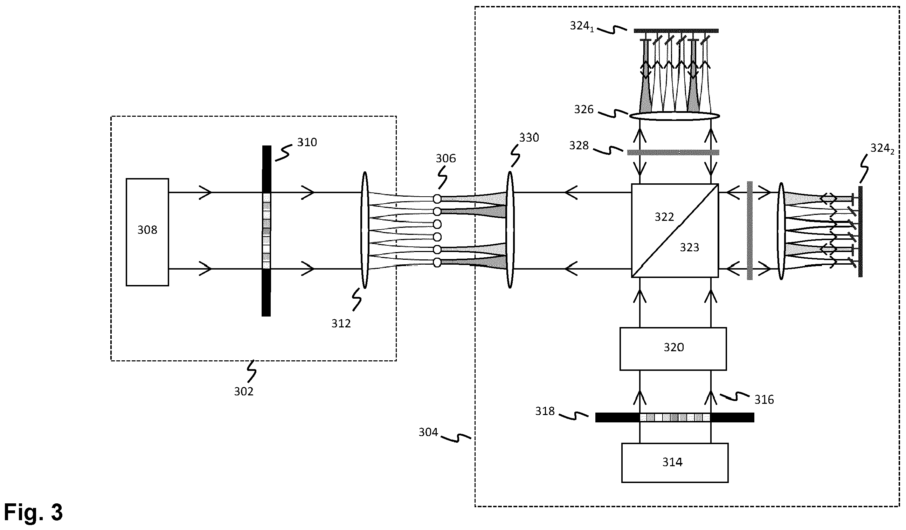

Fig. 3 depicts a system for optically addressing qubits of a qubit array according to an embodiment. As shown in the figure, the system may include a trapping module 302 configured to optically trapping qubits into a geometrical arrangement, e.g. a 2D array, of qubits. The system may further comprise an optical addressing module 304 configured to for simultaneously and individually addressing different qubits in the array of qubits. The optical addressing module may be configured to expose individual qubits in the array of qubits 306 based on information defining qubits that need to be addressed. In an embodiment, one or more illumination patterns may be used wherein each illumination patterns identifies qubits that need to be addressed optically. By exposing qubits in the array of qubits based on addressing information, e.g. different illumination patterns, a quantum algorithm may be executed.

As shown in the figure, the trapping module 304 may include a trapping laser system 308 for generating a laser beam to expose a first spatial light modulator 310 (SLM), e.g. an liquid crystal based SLM comprising pixelated liquid crystal light valves to spatially modulate light of laser beam, to form multiple microtraps for quantum particles, e.g. neutral atoms, in the focal plane of a lens 312.

The optical addressing module may include a laser system 314 for producing a laser beam 316 for exposing a plurality of computer- controlled digital micromirror devices (DMDs) $324_{1,2}$, which are configured to project a predetermined spatially structured light beam onto the qubit array. Here, the spatial structure, i.e. the cross-sectional intensity profile, of the spatially structured light beam originating from a DMD may include one or more spatial modes which may be focused by onto individual qubits in the qubit array. To that end, each DMD includes an array of electronically configurable micromirrors which are optically aligned with the qubit array. This way, a first DMD $324$, may be configured on the basis of addressing information, e.g. a first illumination pattern, to project a spatially structured light beam comprising one or more first spatial modes for qubits that need to be addressed onto the qubit array and the second DMD may be configured on the basis of addressing information, e.g. a second illumination pattern, to project a spatially structured light beam comprising one or more second spatial modes for qubits that need to be addressed onto qubit array. Here, the first and second illumination pattern may identify qubits in a qubit array that need to be optically addressed in order to execute operations of a quantum circuit.

The optical addressing module may further include an optical system configured to expose the qubit array to spatially modulated light originating from different micromirror devices at a high frequency, i.e. frequencies between the 10 MHz up to 1 GHz or even higher. To that end, the optical system may include an arrangement of lenses, quarter-wavelength plates, electro-optical modulator(s) (EOMs) and/or beam splitters. In particular, the optical system may include a second liquid-crystal based spatial light modulator (SLM) 318, e.g. a transmissive or reflective liquid-crystal based SLM for generating a spatially structured light beam that can be used for exposing the micromirror devices with an array of focused light beams. To that end, the spatial structure of the spatially structure light beam may have a cross-sectional intensity profile comprising modes that can be projected onto the micromirrors of the micromirror devices. The optical system may further include a temporal modulator for temporally modulating the spatial structure light beam. In an embodiment, the temporal modulator may be an electro-optic modulator (EOM) 318 configured to modulate the phase or the polarization, e.g. a first polarization orientation and a second polarization. The EOM may be driven by a highfrequency signal to switch the EOM between the different polarization or phase states. A beam splitter 322, optically aligned with a first DMD and a second DMD, may be exposed to the polarized modulated laser beam so that depending on the polarization of the modulated light, eighter the first DMD or the second DMD is exposed with an array of focused light beams. This way, the qubit array is exposed at high frequencies to different illumination patterns.

The addressing modules described with reference to the embodiments may be used for executing different addressing schemes. For example, in an embodiment, the light of a light beam that is focused onto a qubit using the optical addressing module, may directly (resonantly) interact with the qubit. This type of optical qubit addressing may be referred to as spatial addressing. In another embodiment, the light of a light beam that is focused onto the qubit using the optical addressing module may shift the addressed qubit off-resonant. This way, the qubit is effectively "masked"' from expose to a further light beam, e.g. a global laser beam that has a spot large than one or more qubits so that it address a plurality of qubits simultaneously (for example to perform single qubit angle rotation operations). Hence, in this addressing scheme, referred to as spectral addressing, certain qubits in the qubit array are individually addressed by focused light beams of the optical addressing module, so that these qubits put in an off-resonance state, so that these addressed qubits do not resonantly interact with a subsequent light beam.

In contrast to prior art schemes, the optical addressing module provides a fast and scalable optical addressing scheme for individually exposing qubits in a qubit array based on different illumination patterns. An optical switch based on an electro-optical modulation device provides high frequency switching between exposure to at least two differently spatially modulated light beams originating from at least two micromirror device which are configured based on different illumination patterns. Qubit operations including single and multi-qubit gate operations of quantum circuit can be easily encoded into a plurality of illumination patterns which can be simply implemented by programming the DMDs accordingly.

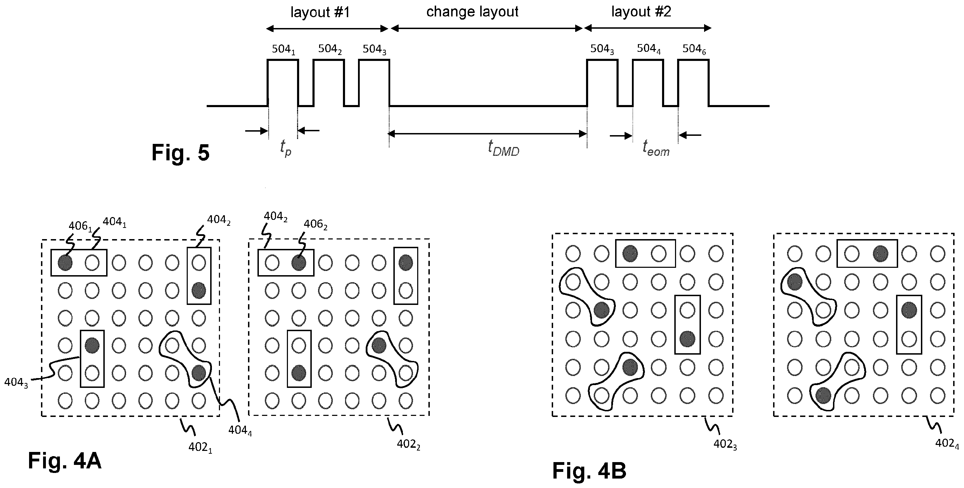

Fig. 4 and 5 depict the use of addressing information in the form of different illumination patterns to expose an array of atomic qubits according to an embodiment. Fig. 4 shows a schematic of the execution of quantum gates by exposing a qubit array using two different illumination patterns $402_{1,2}$, which are configured qubits of qubit pairs are individually addressed by a laser beam. For example, the first and second illumination pattern $402_{1,2}$ illustrate four different qubit pairs $404_{1-4}$ wherein the first illumination pattern identifies one qubit (black dots) of each of the qubit pairs that need to be optically addressed by simultaneously and individually exposing these addressed qubits with a focused laser beam using the optical addressing schemes described in this application. The second illumination pattern identifies the other four qubits of the four qubit pairs that need to be addressed. Thus, using two illumination patterns four different qubit gate operations of a quantum circuit can be efficiently executed in parallel. This way, the illumination patterns may form a first layout of quantum gate operations. After execution of the first gate layout, a new second gate layout defined by a third and fourth illumination patterns $402_{3,4}$ may be selected and used by the computer to configure the micromirrors of the micromirror devices.

Fig. 5 schematically illustrates a timing diagram of the qubit addressing according to an embodiment. As shown in this figure, the micromirror devices of the optical addressing module may be configured based on a first layout (layout #1) comprising a plurality of illumination patterns (for example illumination patterns $402_{1,2}$ as illustrated in Fig. 4A). Then, individual qubits in the qubit array may be alternately addressed based on a first and second illumination pattern at a frequency that is determined by the frequency of the temporal modulation of the light beam that is used to drive the micromirror devices. As shown in Fig. 5, the qubits in the qubit arrays may be optically addressed based on the first illumination pattern $402_1$, the second illumination pattern $402_2$ and again the first illumination pattern $404_1$. This way, the qubits may be exposed to light pulses having a pulse

duration $t_p$ and a pulse frequency that is based on the switching time of the temporal light modulator $t_{eom}$. Such optical addressing scheme may be used to execute gate operations, such as a CNOT gate based on interactions between nearby qubits that are in the Rydberg state. In that case, both the first qubit (control) and the second qubit (target) may be in the Rydberg state. When optically addressing the first qubit with a $\pi$ pulse, the second qubit with a $2\pi$ pulse and finally addressing the first qubit with a $\pi$ pulse, the state of the target qubit will flip if and only if the control qubit is in the state 11). The CNOT gate and other examples are described in more detail in the article by Henriet et al, Quantum computing with neutral atoms, quantum journal, 2020-09-21, volume 4, page 327 which is hereby incorporated by reference.

After execution of the gate operations, the micromirror devices may be configured based on a further layout. The switching to a new second layout (layout #2) may be realized by configuring the micromirrors of the micromirror devices based on two further illumination patterns, e.g. a third illumination pattern $402_3$ and a fourth illumination pattern $402_4$. The switch to the new layout will be determined by the switching time of the micromirror devices $t_{DMD}$. Then, after configuring the micromirror devices, the qubits may be exposed based on new illumination pattern which may for example define further two-qubit gate operations, which can be executed by optically addressing the qubits based on the third illumination pattern $504s$, the fourth illumination pattern $504_4$ and again the third illumination pattern $504_6$.

It is submitted that the illumination patterns and gate operations described with reference to Fig. 4 and 5 are non-limiting examples to illustrate the advantages of the embodiments described in the application. The optical addressing schemes have wide application in control or gate operations and can used for any quantum gate operation involving optical addressing based on optical fields alone or optical addressing based on optical field in combination with microwave fields.

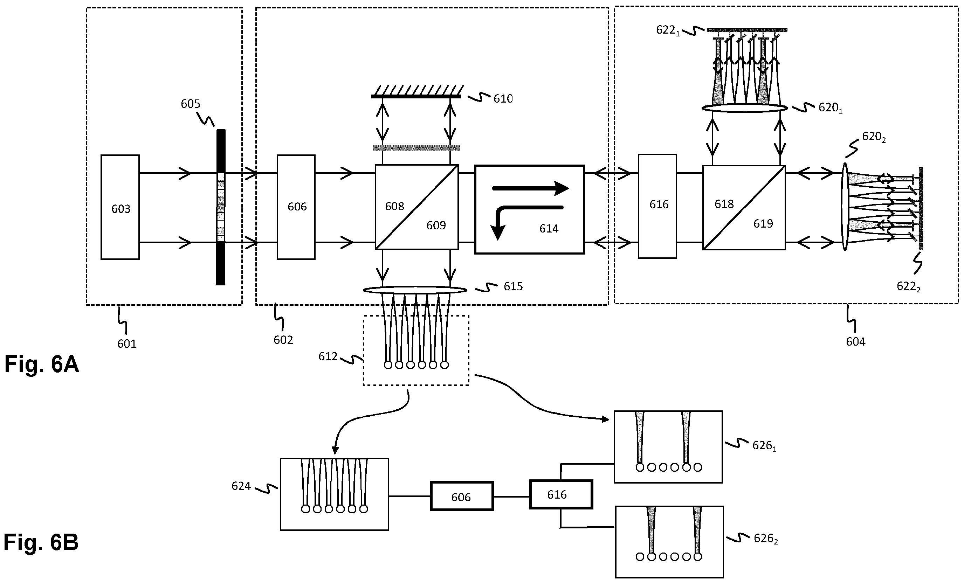

Fig. 6A and 6B illustrate a system for optically addressing qubits of a qubit array according to another embodiment. As shown in the Fig. 6A, the system includes a trapping module 602 configured for optically trap qubits to form an array of qubits and an optical addressing module 604 which is configured to generate different illumination patterns for simultaneously and individually exposing different qubits in the array of qubits 612. Similar to the system of Fig. 3, the optical system configured to expose the qubit array to spatially modulated light originating from different micromirror devices at a high frequency. In the embodiment of Fig. 6 however, the trapping module and the optical addressing module do not have separate light source systems. Instead, one light source system 601 is used to produce a structure light beam for both the trapping module and the optical addressing module.

The optical addressing module may include a first temporal modulator 616 for temporally modulating a light beam that is input to the module. The temporal modulator may be implemented on the basis of an electro-optical modular (EOM) as explained with reference to Fig. 1 and 3.The optical addressing module may further include a beam splitter 618 for splitting a structured light based on polarization or phase and for projecting light beams onto the micromirror devices, an optical relay element 619 for receiving a spatially modulated light beam originating from the micromirror devices and relaying the spatially structured light beam towards the qubit array, at least two computer-controlled micromirror devices $622_{1,2}$ and a lens system $620_{1,2}$ associated with the micromirror devices and the a beam splitter for focusing structured light onto the micromirror devices and for receiving spatially structured light reflected by the micromirror devices. The optical addressing module 604 may be controlled by a computer (not shown) in a similar way as described with reference to Fig. 1-4 above.

As shown in the figure, the light source system may include a light source 603 to and a liquid-crystal type spatial light modulator 605 to produce a spatially structure light beam, which is input to the trapping module. The trapping module may include an electro-optical modulator (EOM) 612 configured to polarize the light of the beam either into a first or second polarization direction. An optical system may be configured to direct the spatially structured light beam on the basis of the polarization either towards the qubit array or towards the input of the optical addressing module. To that end, trapping module may comprise a splitter 608 and an optical relay element 609 which may redirect structured light of a first polarization direction via one or more reflective and/or refractive elements towards a lens system 615 which is configured to generate a plurality of focused trapping beams (optical tweezers) for optically trapping the atomic qubits. In case the structured light of a second polarization direction the structure light is redirected towards the input of the optical addressing module. A further optical element 614, e.g. a circulator, may be used to forward and/or redirect spatially structure light originating from the optical addressing module towards the qubit array.

Hence, the system allows fast switching between either the optical trap module and the optical addressing module so that the qubits. This is schematically shown in Fig. 6B, wherein depending on the polarization state of electro-optical modulator 606, the qubit arrays are either manipulated based on the optical tweezers of the optical trapping module (as depicted in the inset of 624) or qubits are optically addressed based on focused light beams using different illumination patterns (as depicted in the insets of $620_{1,2}$)

It is submitted that the embodiments in this application are not limited to the figures. For example, while the figures illustrate optical addressing of a two-dimensional arrangement of qubits, the optical addressing schemes can also be used to address one-dimensional (1D) or three-dimensional (3D) arrays of qubits. Furter, while the figures show embodiments of two micromirror devices, more than two micromirror devices which are configured based on different illumination patterns may be used as well.

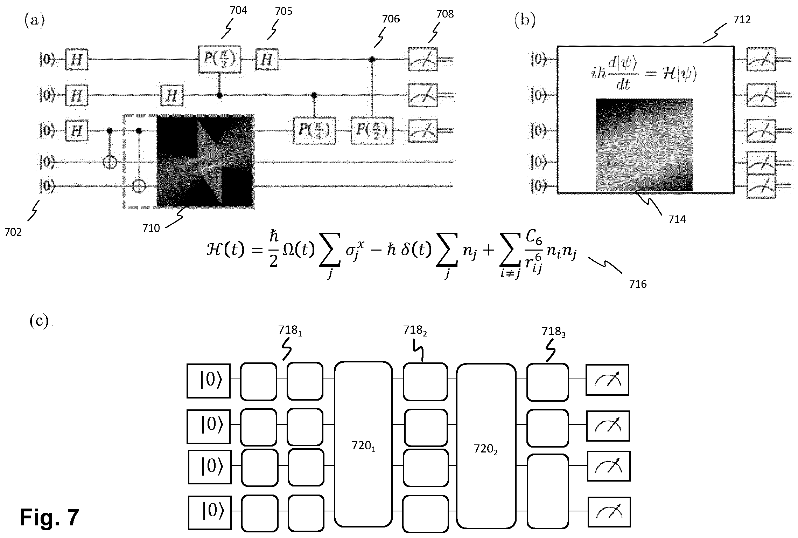

**Fig. 7** show examples of qubit operations which may be executed using the optical qubit addressing schemes described with reference to the embodiments. Unitary operators can be decomposed in two different kinds of operations: digital or analog. Both of these operations are transformations in the quantum Hilbert space over atomic states.

Schematic (a) of **Fig. 7** depicts the digital mode of operation of an atomic quantum register using a "digital" quantum circuit, wherein focused light beam pulses of a predetermined duration may be used to individually address atomic qubits **702** to effectuate transitions between atomic states which effectively implement sets of standardized or 'digital' gates **704,705,706** on computational states followed by one or more readout operations **708** to readout the final state of the quantum register. These digital gates may include any single-qubit operation **704, 705** such as rotations, Pauli gates such as Pauli-X, Pauli-Y and Pauli-Z gates or a Hadamard gate. Additionally, such digital gate operations may also include two-qubit gates **706** such as controlled NOT or controlled Z gates or multi-qubit operations such as Toffoli gates.

Schematic (b) of **Fig. 7** depicts the analog mode of operation of an atomic quantum register, wherein a global laser light pulse may be applied to one or more groups of atoms (or even all atoms) at the same time (as shown in the inset **714**), with certain properties like detuning, Rabi frequencies and Rydberg interactions to cause multi-qubit entanglement thereby effectively driving the evolution of a Hamiltonian **712, 716** of the atomic array in an analog way. The combined quantum wavefunction evolves according to Schrödinger's equation, and particular, unitary operators $\hat{U} = e^{-i\hat{\mathcal{H}}t}$, where $\hat{\mathcal{H}}$ denotes the Hamiltonian and t the time, can be designed by pulse-shaping the parametrised coefficients of the Hamiltonian in time. This way, a parametric analog unitary block can be applied, which entangles the atoms and can act as a variational ansatz, or a feature map, or other entanglement operation. In schematic (b) of **Fig. 7,** the global laser light pulse may be a laser beam which is configured to expose a group of qubits or even all qubits in the quantum array. In an embodiment, the optical addressing module may be used to controllably generate a plurality of light beams to globally address a large group of qubits so that multi-qubit entanglement between the addressed qubits is achieved. To that end, one or more illumination patterns identifying the qubits that need to be optically addressed may be used by the computer to control the optical addressing module.

The digital and analog modes can be combined or alternated, to yield a combination of the effects of each mode. Schematic (c) of **Fig. 7** depicts an example of such digital-analog quantum circuit, including blocks **718₁₋₃** of digital qubit operations (single or multi-qubit) and analog blocks **720₁₋₃.** It can be proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital circuits form a small set of pre-compiled operations, typically but not exclusively on single-qubits (as depicted in **Fig. 7** (a))**,** while analog ones are used to evolve the system over its natural Hamiltonian (as depicted in **Fig. 7** (b)), for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as an atom quantum register. Entanglement can spread more quickly in terms of wall-clock runtime of a single analog block compared to a sequence of digital gates, especially when considering also the finite connectivity of purely digital devices. In order to transform the internal states of these modes, a classical control stack is used to send information to optical components and lasers. The controller may formulate the programmable unitary transformations in a parametrized way. At the end of the unitary transformations, the states of one or more atoms may be read out by applying measurement laser pulses, and then observing the brightness using a camera to spot which atomic qubit is turned 'on' or 'off', 1 or 0. This bit information across the array may then be processed further.

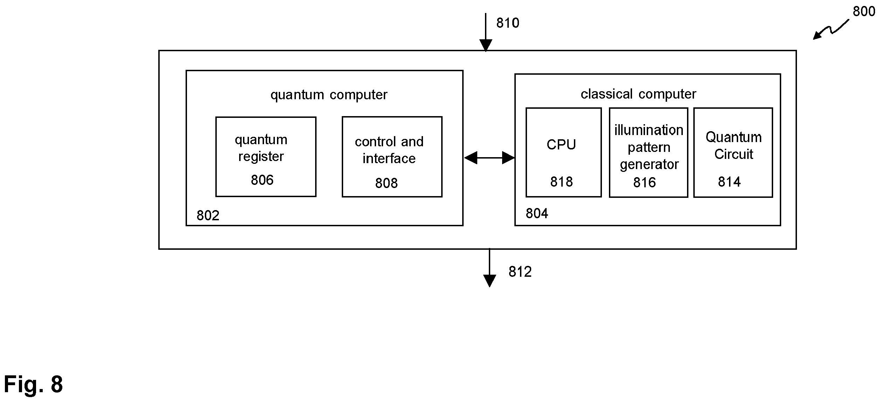

**Fig. 8** depicts a computer system comprising a classical computer **802** and a quantum computer system **804,** comprising an atomic qubit register, including an optical qubit addressing schemes as described with reference to the embodiments in this application. Such computer system may be referred to as a hybrid computer system. As shown in the figure, the quantum computer system may comprise one or more quantum registers **806,** e.g. a gate-based qubit quantum register. Such quantum register may also be referred to as a quantum processor or a quantum processing unit (QPU). The system may further include a classical process **818,** e.g. a CPU and optionally one or more GPUs connected to a memory storage for storing a representation of a quantum algorithm, e.g. in the form of a quantum circuit **814** comprising gate operation that need to be executed on qubits of the quantum register.

A quantum circuit may represent a set of instructions sent by a classical computer to the quantum computer to execute 'gate operations' or 'unitaries' on qubits and to prepare qubits for execution and readout of such gate operations. The execution of a quantum circuits involves a sequence of operations executed on the quantum registers by a controller system **808** comprising input output (I/O) devices which form an interface between the quantum register and the classical computer. For example, the controller system may include an optical and/or electromagnetic pulse generating system for generating pulses, e.g. optical, voltage and/or microwave pulses, for applying gate operations in accordance with the quantum circuit to the qubits of the quantum register.

The controller system may be configured to control an optical addressing module as described with reference to the embodiments. To control the optical addressing module the system may include an illumination pattern generator **816** configured to transform operations, e.g. gate operations and operations required to control (e.g. calibrate, initialize and readout) qubits, into a series of illumination patterns, identifying qubits in the quantum register that need to be optically addressed. Further, the controller may include readout circuitry for readout of the qubits. At least a part such readout circuitry may be located or integrated with the chip that includes the qubits.

The system may further comprise a (purely classical information) input **810** an (purely classical information) output **812.** The input and output may be part of an interface, e.g. an interface such as a user interface or an interface to another system. Input data may include a quantum algorithm including gate operations and, e.g. parameter settings, which may be used to initialize the quantum algorithm. Similarly, output data may include results readout results and other information associated with the execution of the quantum algorithm.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. Method of optically addressing qubits in a qubit array, preferably a 2D qubit array, comprising:

   configuring micromirrors of at least a first and second micromirror device based on addressing information identifying one or more first qubits and one or more second qubits in the qubit array that need to be optically addressed, preferably the addressing information including at least a first and second illumination pattern, the first illumination pattern identifying qubits in the qubit array that need to be optically addressed at a first time instance and second illumination pattern identifying qubits in the qubit array that need to be optically addressed at a second time instance;
   generating a structured light beam which is spatially structured in accordance with the spatial arrangement of the qubits in the qubit array and the spatial arrangement of micromirrors of the first and second micromirror device and which is temporally structured based on a polarization or phase of the structure light beam;
   exposing the first micromirror device with part of the structured light beam that is associated with a first polarisation or first phase and the second micromirror device with a part of the structured light beam that is associated with a second polarisation or second phase; and,
   exposing the one or more first qubits identified with a first plurality of focused light beams formed based on spatially structured light originating from the first micromirror device and exposing the one or more second qubits with a second plurality of focused light beams formed based spatially structured light originating from the second micromirror device.

2. Method according to claim 1 wherein generating a structured light beam includes:

generating a spatially structured light beam by exposing a light beam of a laser system to a spatial light modulator;
temporarily structuring the spatially structured light beam using a polarization modulator or a phase modulator, preferably an electro-optic modulator for modulating the polarization or the phase.

3. Method according to claim 2 wherein the modulation frequency of the polarization modulator is between 10 and 1000 MHz.

4. Method according to any of claims 1-3 wherein exposing the first and second micromirror device includes:
exposing the structured light beam to a beam splitter to split the structured light beam into a spatially structured light beam associated with a first polarization or a first phase and a spatially structured light beam associated with a second polarization or a second phase.

5. Method according to any of claims 1-4 wherein the first and second illumination pattern identify one or more pairs of qubits, the first illumination pattern identifying for each of the one or more pairs of qubits a first qubit that needs to be addressed and the second illumination pattern identifying for each of the one or more pairs of qubits a second qubit that needs to be addressed.

6. Method according to any of claims 1-5 wherein at least part of the first and second illumination pattern define qubit operations of a quantum circuit.

7. Method according to any of claims 1-6 wherein the qubits are atomic qubits and/or wherein wavelength of the structured light beam is selected to control the Rydberg states of the atomic qubits in the qubit array.

8. Method according to any of claims 1-7 further comprising:
after the exposure of the qubits identified by the first and second illumination pattern, configuring micromirrors of the first and second micromirror device in accordance with a third and fourth illumination pattern respectively, identifying further qubits in the qubit array that need to be optically addressed.

9. Method according to any of claims 1-8 wherein each of the plurality of focused light beams is configured to address one of the qubits in the qubit array, without affecting one or more qubits neighbouring the addressed qubit.

10. Method according to any of claims 1-9 wherein each of the first and second micromirror device is configured as a digital micromirror device comprising mechanically movable micromirrors and/or wherein spatial structuring of the structured light beam is based on a liquid crystal based spatial light modulator.

11. Method according to any of claims 1-10 further comprising:
generating a plurality of focussed light beams to form an array of optical tweezers for optically trapping the qubits

12. System for optically addressing qubits in a qubit array, preferably a 2D qubit array, the system comprising a computer connected to an optical system comprising at least a first and second micromirror device, a laser system, a spatial light modulator and an electro-optic modulator, the computer being configured to:

configure micromirrors of at least the first and second micromirror device based on addressing information identifying one or more first qubits and one or more second qubits in the qubit array that need to be optically addressed, preferably at a first time instance and a second time instance respectively;
control the laser system, the spatial light modulator and the electro-optic modulator to generate a structured light beam which is spatially structured in accordance with the spatial arrangement of the qubits in the qubit array and the micromirrors of the first and second micromirror device and which is temporally structured based on a polarization or phase of the structure light beam;
expose the first micromirror device with part of the structured light beam that is associated with a first polarisation or first phase and the second micromirror device with a part of the structured light beam that is associated with a second polarisation or second phase; and,
expose the one or more first qubits identified with a first plurality of focused light beams formed based on spatially structured light originating from the first micromirror device and exposing the one or more second qubits with a second plurality of focused light beams formed based spatially structured light originating from the second micromirror device.

13. Optical qubit addressing module for addressing qubits in a qubit array comprising:

at least first and second micromirror devices configured to project a first spatially structured light beam onto first qubits in the qubit array and to project a second spatially structured light beam onto second qubits in the qubit array;

a first optical system configured to generate a structured light beam which is spatially structured in accordance with the spatial arrangement of the qubits in the qubit array and the spatial arrangement of micromirrors of the first and second micromirror device and which is temporally structured based on a polarization or phase of the structure light beam;

a second optical system configured to expose the first micromirror device with part of the structured light beam that is associated with a first polarisation or first phase and to expose the second micromirror device with a part of the structured light beam that is associated with a second polarisation or second phase; and,

a third optical system configured to expose the first qubits with a first plurality of focused light beams formed based on spatially structured light originating from the first micromirror device and exposing the second qubits with a second plurality of focused light beams formed based spatially structured light originating from the second micromirror device.

14. A hybrid computer system comprising a quantum register comprising an array of qubits and a classical computer system configured to control an optical qubit addressing module configured for addressing qubits in the qubit array, wherein classical computer system is configured to perform executable operations, the executable operations comprising the steps of:

configuring micromirrors of at least the first and second micromirror device based on addressing information identifying one or more first qubits and one or more second qubits in the qubit array that need to be optically addressed, preferably at a first time instance and a second time instance respectively;

generating a structured light beam which is spatially structured in accordance with the spatial arrangement of the qubits in the qubit array and the spatial arrangement of micromirrors of the first and second micromirror device and which is temporally structured based on a polarization or phase of the structure light beam;

exposing the first micromirror device with part of the structured light beam that is associated with a first polarisation or first phase and exposing the second micromirror device with a part of the structured light beam that is associated with a second polarisation or second phase; and, exposing the one or more first qubits with a first plurality of focused light beams formed based on spatially structured light originating from the first micromirror device and exposing the one or more second qubits with a second plurality of focused light beams formed based spatially structured light originating from the second micromirror device.

15. A computer program or suite of computer programs comprising one or more software code portions the software code portions, when run on a computer, being configured for executing the method steps according any of claims 1-11.

Fig. 1

configuring micromirrors of a first and second micromirror device in accordance with a first and second illumination pattern respectively, the first and second illumination pattern identifying qubits in the qubit array that need to be optically addressed;

220

generating a structured light beam which is spatially structured in accordance with the spatial arrangement of the qubits in the qubit array and the spatial arrangement of micromirrors of the first and second micromirror device and which is temporally structured based on polarization or phase of the structured light beam;

222

exposing the first micromirror device with part of the structured light beam that is associated with a first polarization or a first phase and exposing the second micromirror device with a part of the structured light beam that is associated with a second polarization or a second phase;

224

exposing qubits identified by the first illumination pattern with a first plurality of focused light beams formed on the basis of spatially structured light originating from the first micromirror device and exposing qubits identified by the second illumination pattern with a second plurality of focused light beams formed on the basis of spatially structured light originating from the second micromirror device.

226

**FIG. 2B**

**Fig. 2A**

Fig. 3

layout #1     change layout     layout #2

$504_1$   $504_2$   $504_3$       $504_3$   $504_4$   $504_6$

**Fig. 5**

$t_p$       $t_{DMD}$       $t_{eom}$

$406_1$   $404_1$      $404_2$      $404_2$   $406_2$

$404_3$

$404_4$

$402_1$

$402_2$

**Fig. 4A**

$402_3$

$402_4$

**Fig. 4B**

Fig. 6A

Fig. 6B

EP 4 383 141 A1

19

(a)

(b)

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

(c)

**Fig. 7**

**Fig. 8**

Europäisches
Patentamt

European
Patent Office

Office européen
des brevets

# EUROPEAN SEARCH REPORT

Application Number

EP 22 30 6829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/112948 A1 (MASSACHUSETTS INST TECHNOLOGY [US]; KIM DONGGYU [US] ET AL.) 10 June 2021 (2021-06-10) <br> * abstract * <br> * figures 7, 10-12 * <br> * paragraph [0006] * <br> * paragraph [0033] - paragraph [0037] * <br> * paragraph [0056] - paragraph [0058] * <br> * paragraph [0074] * <br> * paragraph [0077] - paragraph [0083] * <br> ----- | 1-15 | INV. <br> G06N10/40 |
| X | WO 2021/222211 A1 (WISCONSIN ALUMNI RES FOUND [US]; COLDQUANTA INC [US]) 4 November 2021 (2021-11-04) <br> * abstract * <br> * figures 1, 2, 5, 6 * <br> * paragraph [0008] * <br> * paragraph [0029] - paragraph [0048] * <br> * paragraph [0053] - paragraph [0055] * <br> * paragraph [0095] - paragraph [0096] * <br> * paragraph [0084] - paragraph [0086] * <br> * paragraph [0063] - paragraph [0068] * <br> ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 4 April 2023 | Papadakis, Georgios |

EPO FORM 1503 03.82 (P04C01)

## ANNEX TO THE EUROPEAN SEARCH REPORT
## ON EUROPEAN PATENT APPLICATION NO.

**EP 22 30 6829**

This annex lists the patent family members relating to the patent documents cited in  the above-mentioned European search report.
The members are as contained in the European Patent Office EDP file on
The European Patent Office is in no way liable for these particulars which are merely given for the purpose of information.

**04-04-2023**

| Patent document cited in search report | | Publication date | Patent family member(s) | | Publication date |
|---|---|---|---|---|---|
| WO 2021112948 | A1 | 10-06-2021 | US | 2021166147 A1 | 03-06-2021 |
| | | | WO | 2021112948 A1 | 10-06-2021 |
| WO 2021222211 | A1 | 04-11-2021 | EP | 4143754 A1 | 08-03-2023 |
| | | | US | 2021337171 A1 | 28-10-2021 |
| | | | WO | 2021222211 A1 | 04-11-2021 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019014589 A

- WO 2021112948 A

**Non-patent literature cited in the description**

- **HENRIET et al.** Quantum computing with neutral atoms. *quantum journal,* 21 September 2022, vol. 4, 327